# EUROPEAN PATENT SPECIFICATION

(11) **EP 2 178 607 B1**
(45) Date of publication and mention of the grant of the patent: **29.06.2011**
(21) Application number: 08780154.4
(22) Date of filing: 10.07.2008
(51) Int. Cl.: A63B 71/06

(54) **APPARATUSES, METHODS AND SYSTEMS RELATING TO AUTOMATIC GOLF DATA COLLECTING AND RECORDING**
VORRICHTUNGEN, VERFAHREN UND SYSTEME ZUR AUTOMATISCHEN SAMMLUNG UND AUFZEICHNUNG VON GOLFDATEN
APPAREILS, PROCÉDÉS ET SYSTÈMES CONCERNANT LA COLLECTE ET L'ENREGISTREMENT AUTOMATIQUES DE DONNÉES DE GOLF

(30) Priority: 12.07.2007 US 949458 P; 09.07.2008 US 170413
(43) Date of publication of application: 28.04.2010
(73) Proprietor: Radar Corporation, San Ramon, CA 94583 (US)
(72) Inventor: SAVARESE, Chris, Danville, CA 94526 (US); MARSHALL, Noel, H.c., Gerringong 2534 N.S.W. (US); MCGILL, Susan, Redwood City, CA 94063 (US)
(74) Representative: Wombwell, Francis
(86) International application number: PCT/US2008/008567
(87) International publication number: WO 2009/009147

(56) References cited:
- EP-A- 1 477 825
- WO-A-96/29124
- WO-A-2005/094951
- US-A1- 2002 091 017
- US-A1- 2007 021 242
- US-B2- 6 582 328

## Description

### FIELD OF THE INVENTION

The present invention relates to the game of golf or other games, and more particularly to an improved golf data collecting and recording system.

### BACKGROUND OF THE INVENTION

GPS rangefinders are popular in the game of golf. GPS rangefinders are used to inform the golfer of the golfer's location on a golf course relative to the location of other mapped areas of interest on the course (e.g. sand traps, greens, etc.) GPS rangefinders are typically available in either cart-mounted or handheld versions.

Examples of popular cart-mounted GPS rangefinder products include Prolink and UpLink. Examples of popular handheld GPS products include the SkyCaddie by SkyHawke and Golflogix, to name a few. A potentially valuable feature of handheld GPS rangefinders is the ability for the golfer to "mark the location" of the ball and other areas of interest. With existing handheld systems the golfer is able to press a button on the handheld devices to mark the location of the ball. Similar technology could be implemented in cart-mounted GPS systems, but the handheld systems have the advantage of the golfer being able to walk to the actual location of the golf ball to mark the location. Often golf carts are restricted to "cart path only" access on a golf course and it is often not practical to drive a golf cart to the actual location of a golf ball due to the terrain.

Marking the location of the ball provides valuable information to the golfer. The current handheld systems operate in approximately the following manner: When the golfer hits the first (tee) shot of a hole the golfer presses a button on the handheld device instructing the device to "mark the spot" where the drive was hit. The device records the GPS coordinates of the first shot. The golfer may manually enter, through a manual input interface, other information on the device such as: type of club used (e.g. driver, 5 iron, etc.), type of contact made with the ball (e.g. hook, slice, straight), wind conditions, etc. The current method to enter such data consists of the golfer making selections on the device by pressing buttons, selecting items from drop down menus, etc.

After the golfer hits the first shot, records the location of the first shot and enters data about the first shot the golfer approaches the ball at rest for the next shot. If the golfer follows the same pattern as the first shot (i.e. hitting the ball, marking the spot of the shot on the device, entering other information) the GPS system can store and display the locations of the first and second shots and calculate the distance of the first shot. If this pattern is continued for every shot of the round the golfer would have very valuable data about the golf round including: distance of all shots, locations of all shots and (if entered), type of contact made on all shots, wind conditions for all shots, etc. The golfer would also know the number of strokes taken per hole which (if accurately recorded) would be the golfer's score for the round. However golfers seldom use the features because the process of manually entering data is too labor intensive on a golf course and will lengthen the duration of each golf shot, causing delays in the game. Patents exist that describe GPS systems with methods for collecting and managing data. Both US Patent No. 6,582,328 (Golflogix) and US Patent No. 7,118,498 (SkyHawke) describe such systems that require the golfer to enter golf shot data.

The problem with existing systems is golfers do not want to take action to record the data of each golf shot. It is inconvenient for golfers to take the time to press buttons, select from drop-down lists, etc. to record information about every golf shot. One could say it is impractical for golfers to do so. Further, if golfers took the time to enter data in such a manual manner it would result in slower play which is not good for the golfers or the golf courses.

The problem of requiring the golfer to enter data manually is known. U.S. Patent No. 7,121,962 and U.S. Patent Application Nos. 2007/0135237 and 2007/0129178 (all by Reeves) teach solving the problem using telemetry equipped golf clubs. The solutions taught by Reeves are impractical and fail to address all the issues required to accurately collect and record golf data. Reeves does not include monitoring the golf ball which is an important part of automatically and accurately recording golf data. For example, if a golfer loses a ball during a hole and replaces the ball with a new, different golf ball the golfer should be automatically assessed a penalty stroke. Without a means of identifying and monitoring the golf ball the system taught by Reeves does not provide sufficient automation. Further, Reeves teaches requiring expensive and sophisticated electronics on the golf club (i.e. battery, motion detector, and accelerometer). The expense and bulkiness of such components make for an impractical solution.

US Patent No. 6,030,109 teaches a system for counting strokes automatically by detecting the distinctive sound made by a ball contacting the club face during a hit. The system disclosed seems to be problematic and potentially ineffective for several reasons. Similar to Reeves, this patent does not include monitoring the golf ball which is an important part of automatically and accurately recording golf data. Further, this patent, which bases the confirmation of a golf stroke by the sound made by the club striking the ball, has no means of knowing whether or not a ball was hit out of bounds or if the ball is lost. A further potential problem relates to the insensitivity to a very gentle putt that generates no characteristic sound pattern.

US Patent Application No. 2006/0270450 teaches a voice activated system for collecting and recording golf data. This system requires action (verbal instruction) by the golfer for each golf action to be recorded. Therefore the system does not automatically record golf data. Golfers may not like having to speak instructions for every action to be recorded.

U.S. Patent No. 7,143,639 and US Patent Application No. 2005/0272516 teach a golf launch monitor that uses RFID tags in golf balls and golf clubs to automatically identify the clubs and balls and to trigger a camera-based launch monitor system. U.S. Patent Application No. 10/672,365, filed 9/26/2003 teaches passive RFID in golf balls and the identifying of such golf balls by a RFID reader.

Other examples of related prior art for golf data collection and management systems include: U.S. Patents No. 6,705,942, 5,086,390, 4,910,677, 5,127,044, 5,283,733, 5,298,904, 6,908,404 and US Patent Applications 2002/0177490,2002/0004723, 2001/0045904, 2002/0188359, 2005/0268704, 2005/0272516 and 2004/0147329.

### SUMMARY OF THE DESCRIPTION

Apparatuses, methods and systems relating to automatic golf data collecting & recording are described herein. In one embodiment, RFID-enabled golf balls and golf clubs and sequences of events and rules allow for automatic recording of when and where a golf stroke occurs.

According to the invention as claimed, an integrated GPS device & RFID transceiver is used with passive RFID tagged golf balls and clubs and sequences of events and rules that enable accurate automatic golf data collection. Active tags may also be used in place of passive tags, but passive tags are preferable, in some embodiments, to reduce weight and need for power supply for the tags.

A handheld GPS unit, in one embodiment, has a RFID transceiver integrated within the same housing. The handheld unit can be worn by the golfer on a belt clip or small enough to be stored in, for example, the front pants pocket.

The RFID transceiver communicates with the passive RFID tags in the ball and club. The transceiver illuminates the RFID tags on the club and ball by transmitting a signal, e.g., a radio frequency signal, from the transceiver to the passive tags on the club and the ball. The RFID tags respond with their codes (e.g. Driver from a club tag, and Ball #1 from a ball tag).

In one embodiment, when the ball is struck:
A. The RFID transceiver uses Doppler radar or transient response of the club tag signal amplitude and/or phase response to detect the velocity of the club followed by the velocity of the ball. The club tag signal is generated, in one embodiment, by the passive tag on the club in response to a signal transmitted by the GPS/handheld unit. At least one ball will have a steady-state response present which will change and then potentially disappear after the ball is struck.
B. The transceiver detects movement of the ball tag. The transceiver detects ball movement by detecting the spin (which may be based on amplitude and/or phase fluctuation) of the ball tag (the ball code or ball tag signal is generated by the passive tag in the ball in response to the signal transmitted by the GPS handheld unit). This provides further confirmation that the ball was struck and is necessary for putts as Doppler is not effective for slow moving objects.
C. The ball code is no longer present (in most cases). The transceiver stops receiving the "Ball # 1" code. This provides further confirmation that the ball was actually hit. Note: in some cases the ball that was struck will not travel a sufficient distance to disappear from detection (e.g. putts or miss-hits).

Several things ("operations or events") occur for the system, in one embodiment, to automatically record a golf stroke without requiring the manual entry by the golfer of information:
1. A unique ball code and a unique club code are detected to be in a predetermined proximity to the transceiver prior to the shot. Note: the transceiver will be programmed to receive only one RFID code from the club (the club closest to the transceiver). This will be the club code with the strongest signal strength. The transceiver will be programmed to receive several ball codes at approximately the same time. More detail on why this is done follows.
2. The signals from at least one of the balls is detected as being "still" for a predetermined amount of time immediately prior to the shot. The consistent signal strength is meant to signify that the golfer has addressed the ball and is preparing to swing at it.
3. When # 1 & # 2 occur together over a period of time, the transceiver transmits/receives at an increased rate. Note: reducing the amount of time the transceiver is sending/receiving at an increased rate will conserve battery power.
4. The ball codes will continue to be received.
5. Using Doppler radar or transient response of the club tag signal amplitude and/or phase, the RFID transceiver detects the velocity of the club followed by the velocity of the ball.
6. The RFID transceiver computes the motion/spin of the ball.
7. The ball code for the ball that was hit is no longer received by the transceiver. Therefore the system knows the code of the ball that was actually hit. For example, if the golfer has two balls in his pockets (Ball 3 & Ball 2) and is hitting Ball 1; after Ball 1 is hit the transceiver will only detect the presence of Ball 2 and Ball 3. The system will automatically register that Ball 1 was hit based on the cumulative information (derived from #3 and #4 and #5 and #6 and #7 occurring in that sequence) about golf ball 1 and golf club.

Note: for putts there will be times when the ball code of the ball hit is still received after the putt is complete. The system can use a different protocol, described herein, for putting. For example, a stationary amplitude signal followed by a relatively slow amplitude and/or phase fluctuation indicates that a ball has moved from stationary to rolling. The system will know when a putter is being used because the putter's RFID tag in the putter identifies the putter to the RFID transceiver (and will know when the golfer is on the putting green because the GPS receiver's latitude/longitude will identify the location relative to a map of the current golf course). Operation 7 will likely be deleted from the protocol of recording a golf stroke for putting. It is possible to include a rule for putting that after Operation 2 has happened (still signals from ball) the system must detect a movement in the ball with diminishing signal strength (meaning the ball is moving away from the transceiver). This could possibly help avoid confusion if a golfer suddenly picked up a ball from the putting green (e.g. to clean it or mark it).

In one embodiment, after the above sequence of events (1 through 7) occurs, the transceiver signals the GPS system to automatically "MARK THE SPOT" where the shot occurred.

In response to this request, the shot location is recorded, along with the club and ball used for the shot. When the next shot is recorded, the distance of the previous shot may be calculated.

The system automatically records, in at least certain embodiments:
● Number of strokes taken per hole/round
● Distance of shots for specific clubs
● Location of all shots
● Number of putts per hole/round
● Type of club and ball used for all shots

In certain embodiments, accurate launch data can also be captured (e.g. club head speed, ball initial velocity, ball spin). This is made possible, in at least certain embodiments, if the transceiver device is designed to be on a "low movement" area of the body during the swing (e.g. the left ankle or foot for a right-handed golfer).

The golf data can be stored and analyzed over a round, year, or lifetime of golf. This information will be very valuable to the golfer.

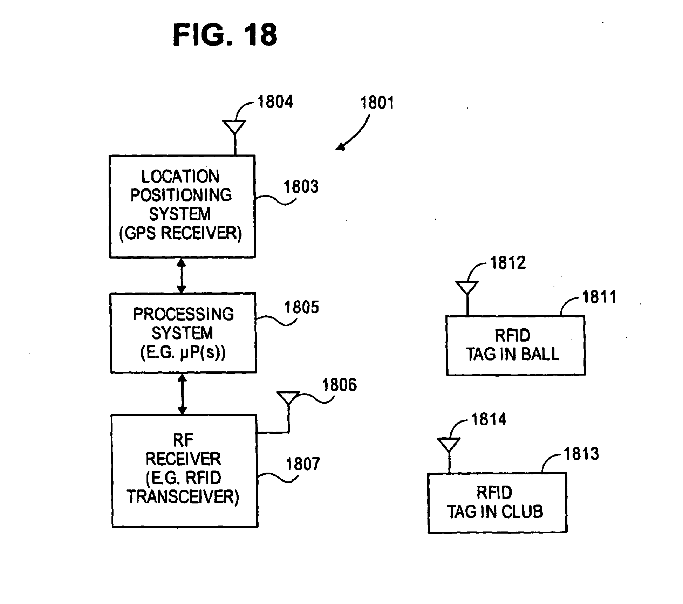

One or more of the methods described herein may be performed by a portable golf data collection system 1801, shown in Figure 18, which may include a memory, a location positioning system 1803, an RF receiver 1807 and a processing system 1805. The system 1801 is one example of various different systems described herein. The location positioning system 1803 may include one or more antennas, such as antenna 1804, and may be a conventional GPS (global positioning system) receiver or other type of satellite positioning system receiver which receive positioning signals from satellites or pseudolites; in other embodiments, the location positioning system 1803 may be part of a cellular telephone positioning system which uses transmission times between cellular towers or basestations to determine the position of the cellular telephone positioning system. The memory (not shown in Figure 18) is coupled to processing system 1805 to store data collected in the methods described herein, such as location of first golf stroke on hole #1 with club #X and location of second golf stroke on hole #2 with club #Y, etc. The memory may also store data representing a map or other two-dimensional position information about one or more golf courses, and this information may be used to help determine automatically when and where a golf stroke has occurred and hence record data, in the memory, about the golf stroke. The RF receiver 1807 includes one or more antennas, such as antenna 1806, which is configured to receive, along with receiving circuitry within the RF receiver 1807, RF signals from an RF tag in a golf club, such as RF tag 1813 (which includes at least one antenna 1814) and RF signals from at least one RF tag in a golf ball, such as RF tag 1811 (which includes at least one antenna 1812). The RF receiver 1807 may also, in certain embodiments, be configured to locate a lost golf ball by detecting RF signals from the lost golf ball and measuring received signal strength of those RF signals in order to guide the golfer to the lost golf ball. Those RF signals may be from the same RF tag which is used to determine automatically when to record the location of a golf stroke or may be from another RF tag, such as a harmonic radar tag described in other patent applications noted herein and assigned to Radar Golf or an active, battery powered RF tag. The system 1801 may be manually switched into a golf ball finding mode in order to activate the finding system and to pause the golf data collection system's use or processing of RF signals. The processing system 1805 is coupled to both the location position system 1803, which may be a GPS receiver, and to the RF receiver 1807, which may be an RFID transceiver to receive identifier codes from one or more golf balls and to receive an identifier code from a RF tag of a golf club. The processing system is configured (e.g. programmed with software) to determine automatically when a golf ball has been hit and to cause a position, determined by the location positioning system, to be saved in the memory in response to determining automatically when a golf ball has been hit. The processing system may be configured (e.g. programmed with software stored in the memory) to determine automatically when a golf ball has been hit based upon the motion of the golf ball, which is immediately preceded by motion of the golf club, wherein motion of the golf ball is determined from RF signals received from the RF tag in the golf ball and motion of the golf club is determined from RF signals received from the RF tag in the golf club. The processing system may be further configured to base its determination on the club used and whether RF signals from the golf ball can still be detected; for example, if the club is not a putter, the absence of the RF signals of the golf ball, preceded by movement of the golf club and then movement of the golf ball, further indicates that a golf stroke has been taken--i.e., a golf ball has been hit.

The system 1801 may further include a networked data processing system which is coupled to a network or to the Internet and may include input/output devices, such as buttons and a touch screen input device which is integrated with a display screen, such as an LCD display. The system 1801 may be integrated in one housing or may be separated into several (e.g. two) housings for attachment to different parts of a golfer or otherwise positioned as described herein.

### BRIEF DESCRIPTION OF THE DRAWINGS

The present invention is illustrated by way of example and not limitation in the figures of the accompanying drawings in which like references indicate similar elements.

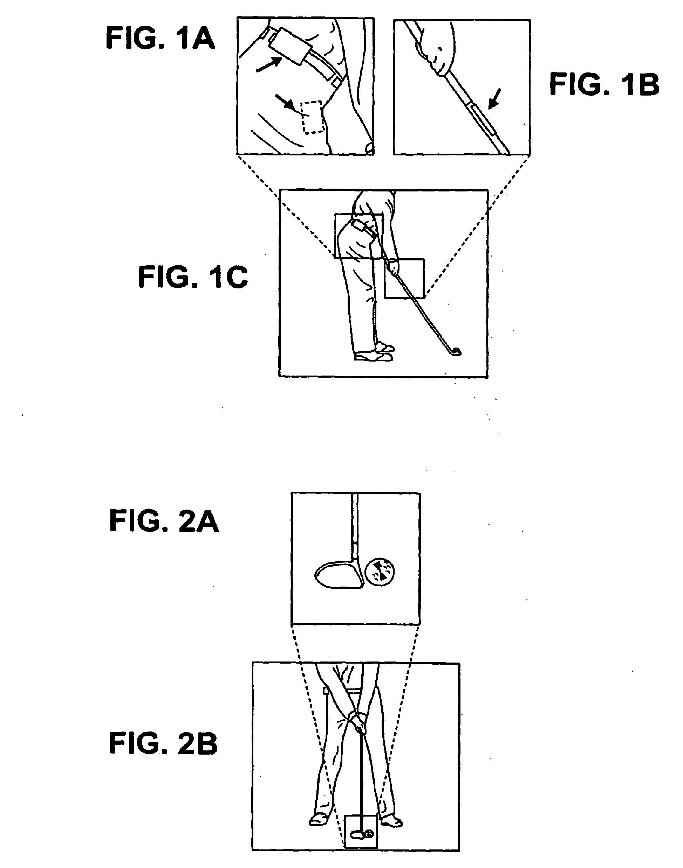

**Figure 1A** shows an apparatus including a GPS receiver and RFID transceiver for collecting and recording golf data. The apparatus is shown clipped onto a golfer's belt or kept in the front pants pocket.

**Figure 1B** shows a RFID tag on a golf club attached to the shaft of the club; immediately under the grip of the club. An alternate location is toward the bottom of the shaft of the club, near the hosel or club head. The tag on the club could be located in other locations on the golf club as well, including the butt-end of the club, built into the grip of the club, etc.

**Figure 1C** is an expanded view showing the apparatus and the RFID tag on the club.

**Figure 2A** shows a golf ball with indication that a RFID tag is inside the golf ball.

**Figure 2B** shows a front view of a golfer addressing a golf ball with a RFID tag inside the golf ball.

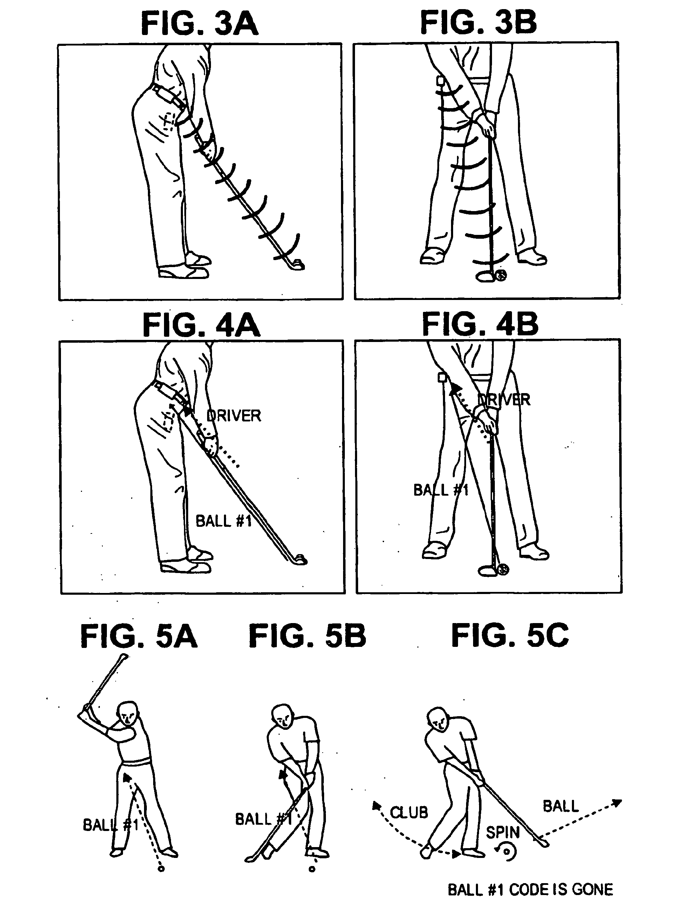

**Figure 3A** shows a side view of a golfer wearing the apparatus and the apparatus transmitting RF signals to the golf club tag and golf ball tag.

**Figure 3B** shows a front view of a golfer wearing the apparatus and the apparatus transmitting RF signals to the golf club tag and golf ball tag.

**Figure 4A** shows a side view of a golfer wearing the apparatus and the apparatus receiving coded RF signals from the golf club tag and golf ball tag.

**Figure 4B** shows a front view of a golfer wearing the apparatus and the apparatus receiving coded RF signals from the golf club tag and golf ball tag.

**Figure 5A** shows a side view of a golfer wearing the apparatus while taking a back swing with the golf club. The apparatus is receiving coded RF signals from the golf ball and the golf club.

**Figure 5B** shows a side view of a golfer wearing the apparatus while taking a down swing with the golf club. The apparatus is receiving coded RF signals from the golf ball and the golf club.

**Figure 5C** shows a side view of a golfer wearing the apparatus while striking the ball. The apparatus uses RF signals to detect the motion of the club and the ball. After the ball is struck the apparatus no longer receives the coded RF signal from the ball because it is no longer there.

**Figure 6** shows a configuration of the apparatus where the GPS receiver and RFID transceiver are in the same housing and worn on the belt or in the front pocket while golfing.

**Figure 7** shows a configuration of the apparatus where the GPS receiver and RFID transceiver are in separate housings and communicate with each other via wireless communication (e.g. Bluetooth). The housings can be worn on the belt or in the front pocket while golfing.

**Figure 8** shows a configuration of the apparatus where the GPS receiver and RFID transceiver are in separate housings and communicate with each other via wireless communication (e.g. Bluetooth). The RFID housing is worn on the ankle or shoe (low movement area) while golfing. For a right-handed golfer the low movement area is the left ankle or shoe and vice versa.

**Figure 9** shows a configuration of the apparatus where the GPS receiver and RFID transceiver are in separate housings and communicate with each other via wireless communication (e.g. Bluetooth). The RFID housing is worn on the brim of a hat (low movement area) while golfing.

**Figure 10** shows a configuration of the apparatus where the GPS receiver and RFID transceiver are in one housing and communicate with an Internet device (e.g. cell phone) via wireless communication (e.g. Bluetooth). The housings can be worn on the belt or in the front pocket while golfing.

**Figure 11** shows a configuration of the apparatus where the GPS receiver and RFID transceiver are in one housing and communicate with an Internet device (e.g. cell phone) via wireless communication (e.g. Bluetooth). The RFID/GPS housing is worn on the ankle or shoe (low movement area) while golfing. For a right-handed golfer the low movement area is the left ankle or shoe and the right ankle or shoe for a left-handed golfer. In some embodiments, a GPS receiver in the cell phone (instead of a GPS receiver worn on the ankle) may be used in the methods described herein.

**Figure 12** shows an example of an existing apparatus designed to fit inside a shoe and communicate wirelessly to another apparatus worn on the body during a sporting activity. The apparatus for the present invention (i.e. the RFID transceiver and/or GPS receiver) can be designed to fit inside a golf shoe in a similar manner.

**Figure 13** shows the size of an existing GPS receiver designed to fit inside a shoe.

**Figure 14** shows an existing design for a GPS receiver built into a running shoe.

**Figure 15** shows an existing handheld GPS device used by people to map golf courses.

**Figure 16** shows a back pack mounted GPS receiver used by people to map golf courses.

**Figure 17** shows two points on a golf course hole. These two points can be identified on a satellite image of the golf course hole and on the golf course hole itself. A person could confirm the X, Y, Z coordinates of the two points with a GPS receiver and adjust a satellite image's coordinates to match.

**Figure 18** shows an example of a location positioning system and an RF receiver system which can automatically cause the collection of data about a golf stroke.

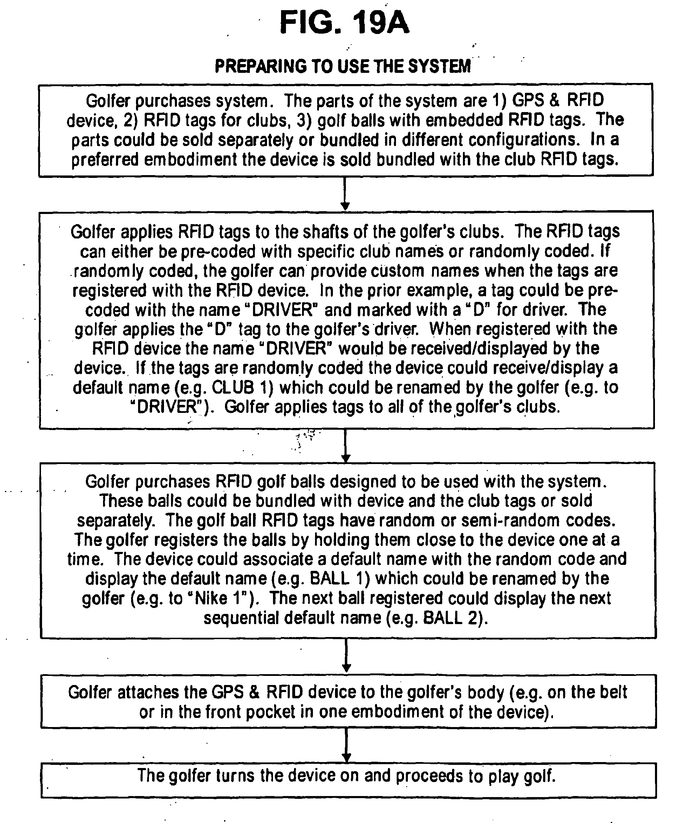

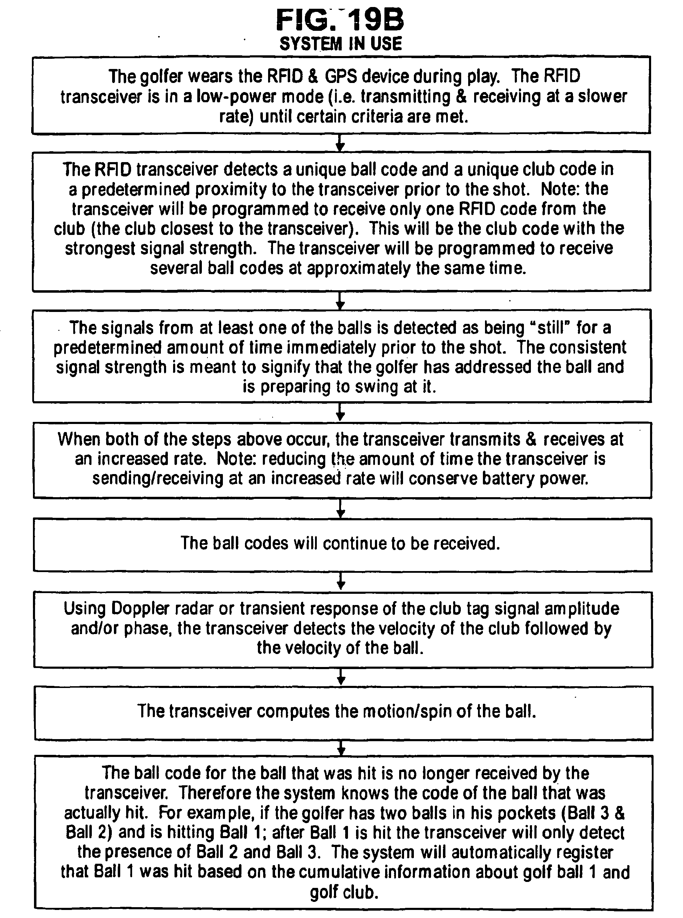

**Figure 19A** is a flow chart showing an example of a method for setting up a system to automatically collect golf data; **Figure 19B** is a flow chart showing an example of a method for automatically determining when to collect data about a golf stroke in combination with collecting data about a location of the golf stroke.

### DETAILED DESCRIPTION

### RFID Tagged Golf Balls

An important aspect of the present invention is the ability to equip golf balls with tags in such a way that the performance of the golf ball is not changed in any way. The golf ball should be conforming to the rules of golf (USGA and R&A) and have the same performance and durability as a non-tagged golfbalL U.S. Patent Application numbers 2005/070375 (filed on September 26, 2003), 2005/048509 (filed on September 26, 2003), and 2006/122007 (filed on October 11, 2005) describe such golf balls with tags.

The tag may be active or passive but should use the architecture described above in order to be a high performance golf ball with high durability and conformance to the rules of golf. In an exemplary embodiment the tag used in the present invention is a passive RFID tag. The passive RFID tag in the ball will consist of an antenna made of elastic conductive material and an electrical component, such as a complementary metal-oxide-semiconductor (CMOS) integrated circuit (IC).

The IC may be packaged in a similar manner to the electrical components in the above references and may be secured in a void in an outer surface of a spherical golf ball component as disclosed in these applications. It may be possible to use a very small IC without component packaging. The IC may be protected in another way from the impact of a club. For example, it may be less expensive to apply a prefabricated passive RFID to the surface of the core of a golf ball and protect the IC by suspending the IC in a void in the ball material and then surrounding the IC with filler material or golf ball material to protect the IC.

Passive RFID tags are well known in the art and can be very inexpensive (approximately US$0.05 each or less in 2007). Alien Technology Corporation is one well-known manufacturer of such inexpensive passive RFID tags. It is estimated by those skilled in the art that passive RFID tags will continue to get less expensive and will eventually be completely printable.

In an exemplary embodiment of the present invention the passive RFID IC in the ball may include a random unique code, used to identify the ball. In another embodiment the IC may include a semi-random unique code. For example, a semi-random code might have a prefix or suffix that identifies information about the golf ball. This information could include Manufacturer name, model, manufacture location, manufacture date, and physical property information such as hardness, dimple pattern, number of layers, etc.

For example, a random unique code might be read by the device as "0011001110101...." and displayed to the golfer as "Ball 1".

An example of a semi-random unique code might include a random prefix following by information about the ball such as "00011101010100..." followed by "- Nike One Platinum, Japan, 2007, 4-Layer, 402 dimple design, dual-radii. The level of detail pre-coded in the IC might have to be minimal (if any) to be economically feasible. However it is likely that this technology will be introduced into the market with one golf ball manufacturer, so at least having the manufacturer's name (and possibly model) may be economically feasible. With a semi-random code scheme the device may read the code such as "00011101010100- Nike One Platinum, Japan, 2007, 4-Layer, 402 dimple design, dual-radii" but display it on the device as "Ball 1 - Nike One". The other data can potentially be stored in the system for review at another time on another device (e.g. website).

There are many possible variations of the RFID code schemes, including the possibility that the passive RFID tags are "Read/Write" capable vs. "Read Only" or Electrically Erasable Programmable Read-Only Memory (EEPROM). The golf ball may further include a harmonic radar tag (which does not respond with an identification code) in addition to an RFID tag which does respond with the identification code; the harmonic radar tag in the ball may be used, in conjunction with a harmonic radar transceiver in the RFID transceiver, to find a lost golf ball (which may be as far away as about 40 feet) if the other RFID tag cannot provide this range of findability.

### Using the system, registering the golf balls

The golfer will, in at least certain embodiments, "register" several balls into the handheld device prior to playing a round. This is done to eliminate the need to register a new ball during the round (if the initial ball played is lost, for example). This will save time during the round.

The golfer will use the "ball registration" mode in the system. The golfer will hold golf balls, one at a time, in close proximity to the transceiver and select a "register" option. The system will read the pre-existing code from the ball, assign a corresponding name in the system and display the name on the device. For example, the system will display "Ball 1".

The golfer may wish to customize the name(s) prior to playing a round of golf. The device will be able to store many registered golf balls in memory. For example, the golfer may have registered the following golf balls prior to the round:
● Ball 1 - Nike Platinum 1
● Ball 2 - Nike Platinum 2
● Ball 3 - Nike Black 3
● Ball 4 - Nike Black 4

Similarly, pre-registered golf balls may come with the system so the golf does not need to register any golf balls. For example, when a user purchases a system, the system will, for example, be offered along with one dozen or more balls, and each of the balls are pre-registered before the system is purchased.

### Reading multiple golf balls, automatically identifying the ball hit

An important aspect of the present invention, in at least certain embodiments, is minimizing the amount of interaction required between the golfer and the system. A unique element of the present invention, in at least certain embodiments, is the reader is configured to receive (and store) multiple ball tag codes at approximately the same time (all balls in close proximity to the reader), but only one club tag code at a time (the strongest club tag code, which should be the club held in a player's hands during the swing, not any of the other clubs which are in the golf bag located at least several feet away from the player when the player swings the club to hit the ball).

The reasons for allowing the reader to store multiple ball codes at the same time include:
**1) Automatic Identification of Golf Ball Used During a Stroke.** Allowing the system to identify specifically which ball was hit during a golf stroke without the golfer having to take an action with the system during the round (e.g. the golfer does not have to press a button, or select from a menu the "ball in play.") The system calculates which ball was hit by the process of elimination. The transceiver detects all balls in close proximity immediately prior to the stroke and after the stroke calculates which ball is missing. For example, if the golfer has two balls in his pockets (Ball 3 & Ball 2) and is hitting Ball 1; after Ball 1 is hit the transceiver will only detect the presence of Ball 2 and Ball 3. Therefore the system will calculate that Ball 1 was hit. Note: there will be occasions when a golf shot occurs but the ball does not leave close proximity of the reader (e.g. a miss-hit). In this case the system will have the ability to know the difference between a "regular" hit and a "miss-hit" by using the data collected. For example, the system could identify a miss-hit by comparing the ball spin characteristics of a "regular" shot (hit with the type of club used) with the velocity measured for the club used.
**2) Automatic Assessment of Penalty During the Play of a Hole**. It is not legal to change golf balls during the play of a hole. It is common to lose a golf ball during the play of a hole. Loss of a golf ball during the play of a hole results in a penalty stroke. When a different ball is hit during the same golf hole the system will know that a different ball was hit and the system will automatically access a penalty stroke. The system will be able to determine whether the ball is changed during a hole by: a) the GPS coordinates in relation to the golfer's position on the course, and/or b) the clubs being used for the shots:
**3) Allowing the Golfer to Switch Golf Balls Between Holes Without Penalty.** It is permissible to switch golf balls between holes. The system will be able to identify when a different ball is used between holes and not access a penalty stroke. It can determine if a ball is changed between holes by: a) the clubs being used for the shots, and/or b) the GPS coordinates in relation to the golfer's position on the course.
**4) Automatically Detecting Provisional Shots**. When a golfer hits a shot that may or may not be out-of-bounds (often difficult to determine from a distance) the golfer hits a "provisional" shot in case the first shot was out-of-bounds. The system will have the ability to know whether the first shot was found in bounds or not. For example, if the system determines the golfer hit a first shot using Ball 1 and a second shot using Ball 2 from the same position, the system would automatically assess a penalty stroke. If, however, the third shot was hit using Ball I again the system would determine that Ball 1 was found in bounds and Ball 2 was a provisional ball. The system would automatically remove the penalty.

### Practice Shots - How the system handles shots that are not part of the round

It is common for golfers to practice by hitting golf balls between holes during a round of golf. The rules of golf permit hitting practice shots in certain areas and circumstances. For example, it is allowable to practice chipping and putting on any tee box, even on the hole you just finished, as long as you are not slowing down or holding up play.

For the golfer using the system to record the golfer's round, the golfer could select, through an input device such as buttons or a pull down menu, a "pause" or "practice" option on the device. The golfer would have to remember to take this action. The golfer would also have to remember to select a "resume" or "end practice" option on the device or simply use a different ball (with no RFID tag) for the practice shots.

### Confirming data at the end of each hole

The system may require the golfer to "confirm" the automatic recording of the hole upon completion of the hole. In certain embodiments, the system will require the golfer to "confirm" the automatic recording of the hole upon completion of the hole; the system will automatically prompt the golfer, after detecting completion, to confirm the recording. So, if the golfer practiced before a hole and forgot to put the device in "practice" mode the golfer would be able to correct the data at the end of the hole.

### Marking the location of each hole

At the end of a hole the golfer will be prompted to confirm the data collected on the hole. For example, if a golfer scores a "5" on a hole the device's display will show a "5" as the score. It might also display the recorded locations of all five shots. The golfer could be presented with "confirm" and "edit" choices. If the golfer chooses to "edit" the score there could be several ways to edit the data. The golfer could potentially delete strokes by selecting the stroke number, then "delete".

If the golfer chooses to "confirm" the score the golfer would then be presented with the option to "mark the hole location" (i.e. "yes" or "no"). If yes, the golfer can capture the distance of the last shot (usually a putt) made. If the golfer selects yes the device would instruct the golfer to hold the device over the hole and select a "mark the spot" button.

### Physical Embodiments

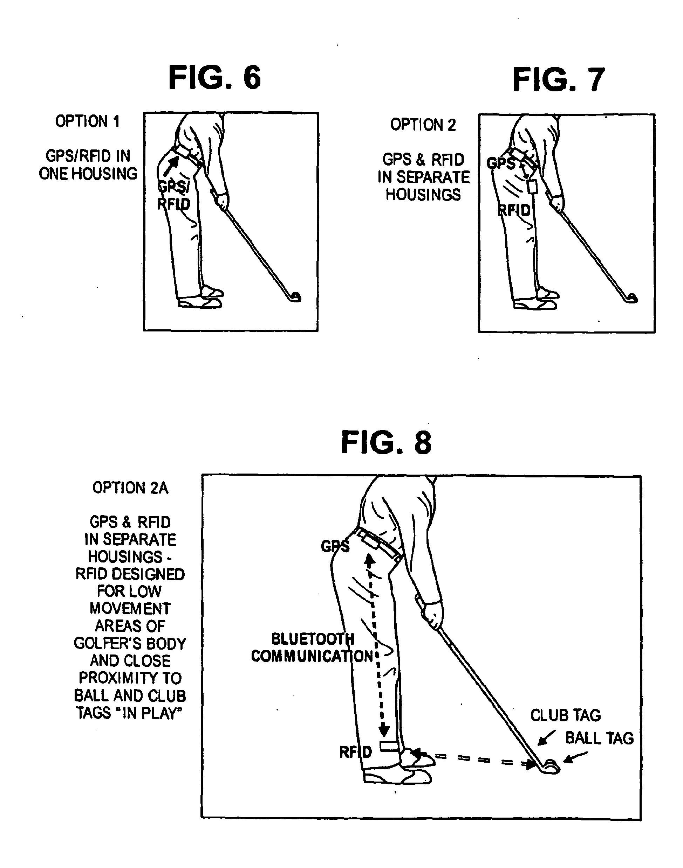

### Option 1- GPS & RFID transceiver all in one housing; see Figure 6

The hardware and electronics required to communicate with the ball tags and the club tags are included in the GPS handheld device. The device is worn on the golfer's belt or kept in the golfer's front pocket. In a preferred embodiment the device also has broadband Internet connectivity - allowing for on-the-fly downloading of golf course maps and uploading of data collected after a round of golf.

### Option 1A - GPS & RFID transceiver all in one housing plus RFID repeater device in close proximity to the ball tag and club tag "in play".

This option includes a repeater that can be worn on the shoe or ankle of the golfer (close to the ball and club tags). This option may improve signal reception from the ball and club tag, simplifying the electronics in the main RFID transponder housing.
NOTE: ALL OPTIONS BELOW CAN ALSO INCLUDE AN OPTION WITH A SEPARATE RFID REPEATER COUPLED TO THE RFID TRANSCEIVER.

### Option 2 - RFID transceiver in a separate housing (see example shown in Figure 7)

This option may be easier to manufacture (e.g. less shielding requirements), but would require the golfer to wear two devices while golfing.

The hardware and electronics required to communicate with the ball tags and the club tags are included in a housing (separate from the GPS device housing). The RFID device is worn on the golfer's belt or kept in the golfer's front pocket and communicates with the GPS device - also worn on the belt or in the pocket - wirelessly (e.g. via Bluetooth or similar). In a preferred embodiment the GPS device also has broadband Internet connectivity - allowing for on-the-fly downloading of golf course maps and uploading of data collected after a round of golf.

### Option 2A - RFID transceiver in a separate housing, designed to be worn in "low movement" area of the body and in closer proximity to the ball and club tags "in play".

This option may simplify the data collection because the RFID reader may be in closer proximity to the ball & tag "in play" and/or because the area of the body moves less during the golf swing. An example of option 2A is shown in Figure 8.

For example, the RFID device (e.g. RF receiver 1807) may be designed to be worn around the ankle, or over the shoe, or potentially built-in to clothing or equipment (e.g. built-in to golf shoes). This example is given because during a golf swing one of the golfer's feet remains relatively still throughout the golf swing. For a right-handed golfer, the left foot would be the preferred area to wear the RFID device as the left foot and lower left leg stay relatively still during the swing.

The hardware and electronics required to communicate with the ball tags and the club tags are included in a housing (separate from the GPS device housing). The GPS device is worn on the golfer's belt or kept in the golfer's front pocket and communicates with the RFID device wirelessly (e.g. via Bluetooth or similar). In a preferred embodiment the GPS device also has broadband Internet connectivity - allowing for on-the-fly downloading of golf course maps and uploading of data collected after a round of golf.

### Option 2B - RFID transceiver in a separate housing, designed to be worn in "low movement" area of the body

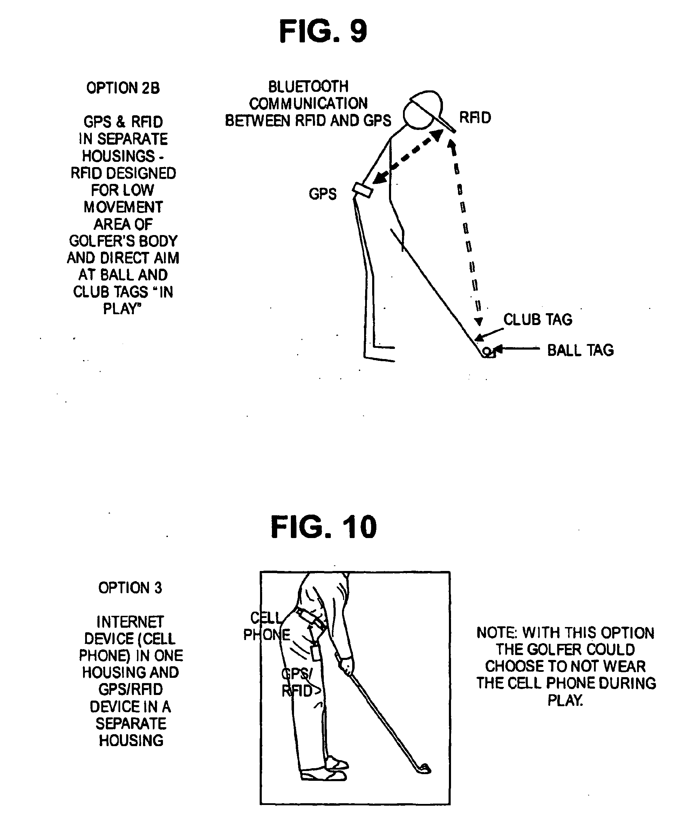

This option is similar to option 2A, except in this option the RFID device is attached to or coupled with the brim of the golfer's hat. Figure 9 shows an example of this option. During the golf swing the head stays relatively still and is aimed directly at the ball tag and club tag that are "in play".

Note that the RFID device could be designed to attach to other parts of the body or be built-in to other clothing and/or equipment worn by the golfer.

It is also possible that (for golfers with caddies) the caddie could wear or hold any or all of the devices or that the RFID device (e.g. RF receiver 1807) may be in a carry bag which is stationary. This would allow the golfer to not wear any devices and would ensure the devices are relatively still during the swing of the club.

### Option 3 - RFID transceiver & GPS in one housing - Internet device (cell phone) in a separate housing

This option, an example of which is shown in Figure 10, may be easier to manufacture (e.g. less shielding requirements). This embodiment will allow the golfer the flexibility of wearing the Internet device (cell phone) while golfing or not. If the golfer prefers to not wear the cell phone during play, the data could be recorded by the GPS/RFID device and automatically sent to the cell phone when in close proximity via wireless communication (e.g. Bluetooth). For example, the golfer could keep the cell phone in the golf cart. When the golfer returns to the cart after each shot the data would be sent to the cell phone via Bluetooth.

The GPS receiver and the hardware and electronics required to communicate with the ball tags and the club tags are included in a housing (separate from the cell phone housing). The GPS/RFID device is worn on the golfer's belt or kept in the golfer's front pocket and communicates with the cell phone wirelessly (e.g. via Bluetooth or similar).

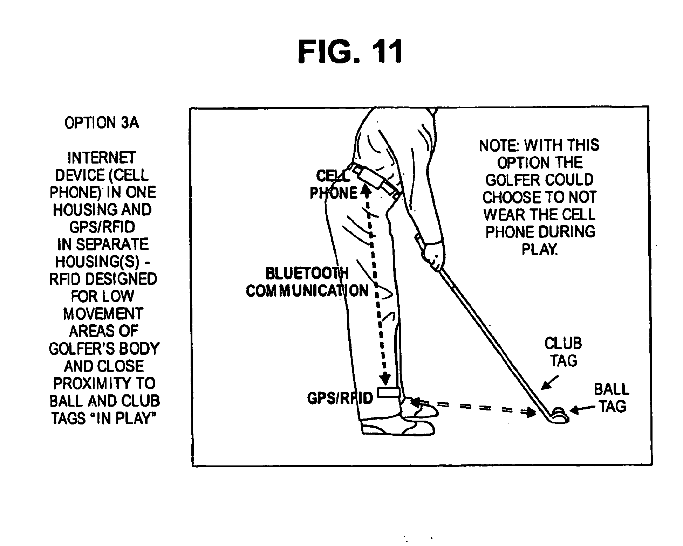

### Option 3A - Internet device (cell phone) in one housing and GPS/RFID in separate housing(s) designed to be worn in "low movement" areas of the body and in closer proximity to the ball and club tags "in play". Figure 11 shows an example of this option.

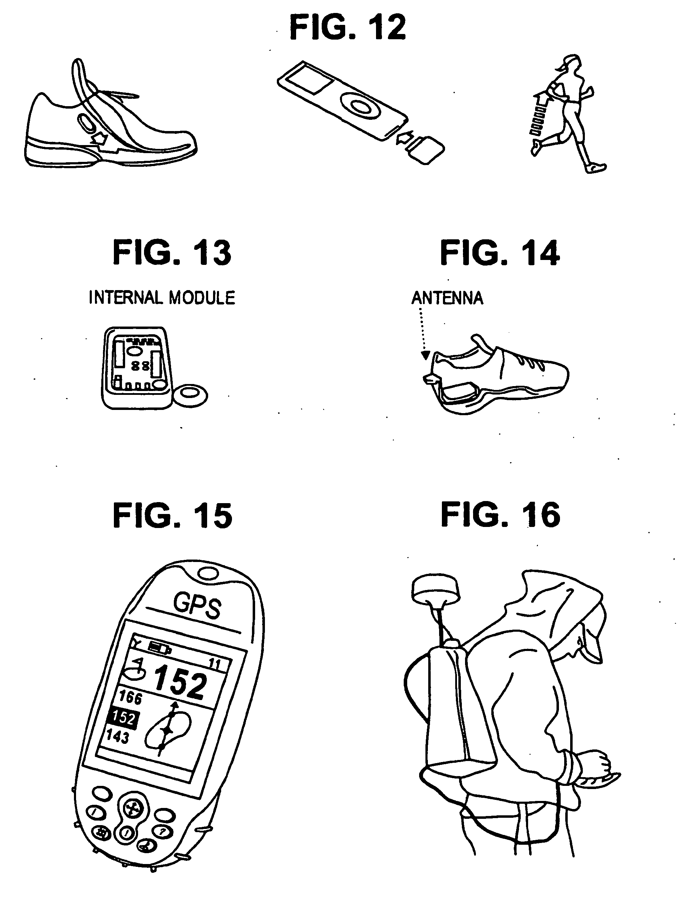

In this option both the RFID transceiver and the GPS receiver are not housed with the Internet device. Rather, the GPS and RFID devices are designed to be worn on/over the golf shoe, around the ankle or in other low movement areas of the body (e.g. the brim of a golf hat). This option would allow the golfer to not have to wear the Internet device during play. In one embodiment of this option a pair of golf shoes could be designed to receive a GPS receiver in one shoe and an RFID transceiver in the other. For the right-handed golfer the RFID transceiver would be worn on the left foot and vice versa. See examples of Nike + iPod running shoes with electronics inserts and GTXC GPS enabled shoes (Figure 12).

Multiple configurations of the GPS device and RFID transceiver are possible.

### ALTERNATE GOLF COURSE MAPPING TECHNIQUE

Existing GPS companies (i.e. Golflogix and SkyCaddie) use people to map golf courses. The person mapping the course wears a backpack GPS receiver or one of the handheld products themselves (e.g. the SkyCaddie). See Figures 15 and 16.

This method is effective but the accuracy depends on the quality of job being performed by the mapper. For example, individual golfers can map their own courses and upload the data to sites such as SkyGolf.com. However, it is difficult for SkyGolf to know how accurate the data is. Therefore SkyGolf employs workers and trains them how to accurately map the courses. This is a very time-consuming and expensive endeavor as there are many points of interest to map on the golf course.

A more efficient method of mapping golf courses is described herein. Using overhead photography or satellite imagery (e.g. Google Maps) one could use a computer and a minimal amount of mapped points on a golf course to provide complete golf course map data.

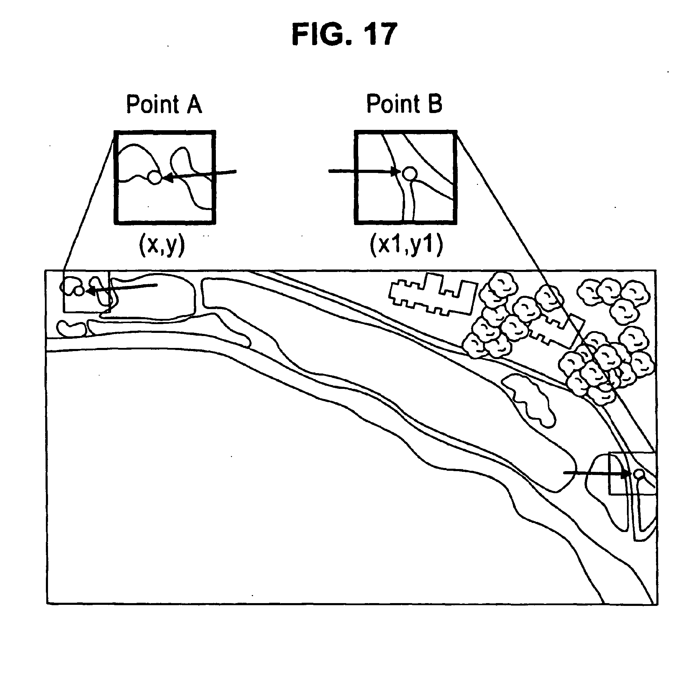

Satellite images of golf courses are relatively accurate but not exact. Satellite imagery (e.g. Google Earth) can contain X, Y & Z coordinates. The two dimensional photographs are layered with earth contours to create accurate three dimensional depictions of the earth. See Figure 17.

If one was to take data from Google Earth for example and physically record a small number of positions at a golf course (i.e. 5-20 positions) the Google Earth map could be mathematically manipulated so that the 5-10 points taken at the course match exactly with the Google Map data. From there, the balance of the points of interest could be determined virtually - on the computer. This would save huge amounts of time and expense in physically mapping all points of interest on golf courses.

## Claims

1. A portable golf data collection system comprising:
a memory;
a location positioning system;
an RF receiver configured to receive RF signals from an RF tag in a golf club and configured to receive RF signals from an RF tag in a golf ball;
a processing system coupled to the location positioning system and to the RF receiver and to the memory, the processing system being configured to determine automatically when a golf ball has been hit and to cause a position, determined by the location positioning system, to be saved in the memory in response to determining automatically when a golf ball has been hit and wherein a change in kinematics of the golf club followed by a change in kinematics of the golf ball triggers the processing system to record a golf stroke.

2. The system as in claim 1 wherein the processing system is programmed to determine automatically when a golf ball has been hit based upon motion of the golf ball, which is preceded by motion of the golf club, wherein motion of the golf ball is determined from RF signals from the RF tag in the golf ball, and wherein motion of the golf club is determined from RF signals from the R F tag in the golf club.

3. The system as in claim 2 wherein the processing system is programmed to determine automatically when a golf ball has been hit also based upon, if the golf club is not a putter, the absence of the RF signals from the RF tag in the golf ball after the motion of the golf ball.

4. The system as in claim 3, wherein the RF receiver is also configured to allow a golfer to find a lost ball by receiving RF signals from at least one of the RF tag in the golf ball and another RF tag in the golf ball, and wherein the another RF tag is one of either a harmonic radar tag or an active, battery-powered RF tag, and wherein the location positioning system is one of a satellite positioning system or a cellular telephone positioning system.

5. The system as in claim 3 wherein the memory includes information about a golf course which is compared to the position in order to determine when a golf stroke is a putt.

6. A method to record a golf stroke, comprising:
detecting presence of a plurality of golf balls, each having a RFID tag;
detecting presence of a golf club, the golf club having a RFID tag;
detecting, by a transceiver, a plurality of RFID signals from the plurality of golf balls;
detecting, by the transceiver, a swing of the golf club and a change in kinematics of one of the plurality of golf balls to thereby determine that one of the golf balls has been hit; and
registering a golf stroke, automatically, in the transceiver, in response to determining that the one of the plurality of golf balls with its RFID tag has been hit and wherein a change in kinematics of the golf club followed by a change in kinematics of the one of the plurality of golf balls triggers the transceiver to record the golf stroke.

7. The method of claim 6 wherein each of the RFID tags in each of the plurality of golf balls are pre-registered with the transceiver before the plurality of golf balls are put into play and wherein the transceiver automatically causes a recording of a location of the one of the plurality of golf balls when registering the golf stroke.

8. The method of claim 7 wherein the transceiver is in a lower-power mode and transmits at a slower rate before detecting the presence of both the golf club and the plurality of golf balls.

9. The method of claim 8 wherein the transceiver is programmed to receive a signal from the RFID tag on the golf club, the golf club being the one golf club among a plurality of golf clubs each having a RFID tag that is closest in proximity to the transceiver based upon a signal strength of RFID tags on golf clubs.

10. The method of claim 9 wherein the transceiver determines one of the plurality of golf balls is stationary by detecting a consistent signal strength from the one of the plurality of golf balls and wherein the method further comprises:
switching to a ball finding mode; and
automatically detecting provisional shots.

11. The method of claim 9 wherein the transceiver determines a golfer is prepared to make a golf swing when detecting both the one of the plurality of golf balls and the golf club has consistent signal strengths.

12. The method of claim 11 wherein the transceiver transmits and receives signals to the RFID tag in the one of the plurality of golf balls and the RFID tag in the golf club at an increased rate after detecting the presence of both the golf club and the golf balls.

13. The method of claim 9 wherein the change in kinematics of the one of the plurality of golf balls is measured by a spinning of the ball from a spinning of the RFID tag in the one of the plurality of golf balls and wherein the change in kinematics of the golf club is measured by at least one of Doppler radar or transient response in the amplitude or the phase response of a signal from the RAID tag on the golf club.

14. The method of claim 9 wherein the change in kinematics of the one of the plurality of golf balls includes not detecting a signal from the one of the plurality of golf balls after the golf ball has been hit out of range of the transceiver.

15. A method to automatically assess a penalty stroke during a golf game, comprising:
determining a golfer's position on a golf course using a positioning system;
receiving, at an RFID transceiver, a first RF signal from a first RFID tag from a first golf ball;
determining a golf club having a RFID tag;
comparing the first RF signal from the first RFID tag from the first golf ball against a second RF signal from the second RFID tag from a second golf ball in a golf shot previously made; and
determining if a penalty stroke is to be assessed based on the golfer's position on the golf course, the golf club having the RFID tag to be used, and if the first golf ball is different from the second golf ball.

16. The method of claim 15 further comprising assessing, automatically, a penalty stroke if the position of the golf ball is out of bounds and if the first golf ball is different from the second golf ball.

## Patentansprüche

1. Tragbares Golfdatensammelsystem, umfassend:
einen Datenspeicher,
ein Positionsortungssystem,
einen Hochfrequenzempfänger, der zum Empfang von Hochfrequenzsignalen von einem Hochfrequenz-Tag in einem Golfschläger und zum Empfang von Hochfrequenzsignalen von einem Hochfrequenz-Tag in einem Golfball ausgebildet ist,
ein Verarbeitungssystem, das mit dem Positionsortungssystem und mit dem Hochfrequenzempfänger und mit dem Datenspeicher verbunden ist, wobei das Verarbeitungssystem dazu ausgebildet ist, automatisch zu ermitteln, wenn ein Golfball geschlagen worden ist, und zu bewirken, dass eine Position, die von dem Positionsortungssystem ermittelt worden ist, als Antwort darauf in dem Datenspeicher gespeichert wird, dass automatisch ermittelt wird, wenn ein Golfball geschlagen worden ist, und wobei eine Änderung in der Kinematik des Golfschlägers, gefolgt von einer Änderung in der Kinematik des Golfballes, das Verarbeitungssystem auslöst, um einen Golfschlag aufzuzeichnen.

2. System nach Anspruch 1, bei dem das Verarbeitungssystem programmiert ist automatisch zu ermitteln, wenn ein Golfball geschlagen worden ist, und zwar basierend auf der Bewegung des Golfballes, der die Belegung des Golfschlägers vorausgegangen ist, wobei die Bewegung des Golfballes von den Hochfrequenzsignalen von dem Hochfrequenz-Tag im Golfball ermittelt wird und wobei die Bewegung des Golfschläger von den Hochfrequenzsignalen von dem Hochfrequenz-Tag im Golfschläger ermittelt wird.

3. System nach Anspruch 2, bei dem das Verarbeitungssystem programmiert ist automatisch zu ermitteln, wenn ein Golfball geschlagen worden ist und zwar ferner basierend auf der Abwesenheit der Hochfrequenzsignale des Hochfrequenz-Tags im Golfball nach der Bewegung des Golfballes, wenn der Golfschläger kein Putter ist.

4. System nach Anspruch 3, bei dem der Hochfrequenzempfänger ferner dazu ausgebildet ist, einem Golfspieler zu ermöglichen, einen verlorenen Ball zu finden, indem Hochfrequenzsignale von einem Hochfrequenz-Tag in dem Golfball und/oder von einem anderen Hochfrequenz-Tag in dem Golfball empfangen werden und bei dem der andere Hochfrequenz-Tag entweder ein harmonischer Radar-Tag oder ein aktiver, mit einer Batterie betriebener Hochfrequenz-Tag ist und das Positionsortungssystem ein Satellitenortungssystem oder ein zellenförmiges Telefonortungssystem ist.

5. System nach Anspruch 3, bei dem der Datenspeicher Information über einen Golfplatz enthält, die mit der Position verglichen wird, um zu ermitteln, ob ein Golfschlag ein Putt ist.

6. Verfahren zum Aufzeichnen eines Golfschlages, umfassend:
Erfassen der Anwesenheit von mehreren Golfbällen, von denen jeder mit einem RFID-Tag ausgerüstet ist,
Erfassen der Anwesenheit eines Golfschläger, wobei der Golfschläger mit einem RFID-Tag ausgerüstet ist,
Erfassen von mehreren RFID-Signalen von den mehreren Golfbällen mittels eines Sende-/Empfangsgeräts,
Erfassen eines Schwunges des Golfschlägers und einer Änderung in der Kinematik von einem der mehreren Golfbälle mittels des Sende-/Empfangsgeräts, um **dadurch** zu ermitteln, dass einer der Golfbälle geschlagen worden ist, und
automatisches Registrieren eines Golfschlages in dem Sende-/Empfangsgerät als Antwort darauf, dass ermittelt worden ist, dass einer der mehreren Golfbälle mit seinem RFID-Tag geschlagen worden ist, und wobei eine Änderung in der Kinematik des Golfschläger, gefolgt von einer Änderung in der Kinematik von dem einen der mehreren Golfbälle, das Sende-/Empfangsgerät auslöst, um den Golfschlag aufzuzeichnen.

7. Verfahren nach Anspruch 6, bei dem jeder der RFID-Tags in jedem der mehreren Golfbälle in dem Sende-/Empfangsgerät vorregistriert ist, bevor die mehreren Golfbälle in das Spiel gebracht werden, und bei dem das Sende-/Empfangsgerät eine Aufzeichnung einer Position des einen der mehreren Golfbälle automatisch bewirkt, wenn der Golfschlag registriert wird.

8. Verfahren nach Anspruch 7, bei dem sich das Sende-/Empfangsgerät in einer Betriebsart mit niedriger Leistung befindet und mit einer geringeren Rate überträgt, bevor die Anwesenheit sowohl des Golfschlägers als auch der mehreren Golfbälle erfasst wird.

9. Verfahren nach Anspruch 8, bei dem das Senden/Empfangsgerät programmiert ist ein Signal von dem RFID-Tag an dem Golfschläger zu empfangen, wobei der Golfschläger derjenige Golfschläger unter mehreren jeweils einen RFID-Tag aufweisenden Golfschlägern ist, der sich, basierend auf einer Signalstärke von RFID-Tags an Golfschlägern, in größter Nähe zu dem Sende-/Empfangsgerät befindet.

10. Verfahren nach Anspruch 9, bei dem das Sende-/Empfangsgerät ermittelt, dass sich einer der mehreren Golfbälle in Ruhe befindet, indem eine gleichmäßige Signalstärke von dem einen der mehreren Golfbälle erfasst wird, und das ferner folgende Schritte umfasst:
Umschalten in einen Modus zum Auffinden eines Balles und
automatisches Erfassen von provisorischen Schlägen.

11. Verfahren nach Anspruch 9, bei dem das Sende-/Empfangsgerät ermittelt, dass ein Golfspieler bereit ist, einen Golfschwung auszuführen, wenn erfasst wird, dass sowohl der eine der mehreren Golfbälle als auch der Golfschläger eine gleichmäßige Signalstärke haben.

12. Verfahren nach Anspruch 11, bei dem das Sende-/Empfangsgerät Signale zum RFID-Tag in dem einen der mehreren Golfbälle und zu dem RFID-Tag in dem Golfschläger mit einer erhöhten Rate überträgt und empfängt, nachdem die Anwesenheit sowohl des Golfschlägers als auch der Golfbälle erfasst worden ist.

13. Verfahren nach Anspruch 9, bei dem die Änderung in der Kinematik des einen der mehreren Golfbälle über eine Drehbewegung des RFID-Tags in dem einen der mehreren Golfbälle durch eine Drehbewegung des Balls gemessen wird und bei dem die Änderung in der Kinematik des Golfschlägers durch Doppler-Radar und/oder durch ein Einschwingverhalten bezüglich der Amplitude und/oder durch den Phasenverlauf eines Signals von dem RFID-Tag an dem Golfschläger gemessen wird.

14. Verfahren nach Anspruch 9, bei dem die Änderung in der Kinematik des einen der mehreren Golfbälle das Nicht-Erfassen eines Signals von dem einen der mehreren Golfbälle einschließt, nachdem der Golfball in einen Bereich außerhalb des Erfassungsbereiches des Sende-/Empfangsgeräts geschlagen worden ist.

15. Verfahren zum automatischen Festsetzen eines Strafschlages während eines Golfspiels, umfassend:
Ermitteln einer Position eines Golfspielers auf einem Golfplatz unter Verwindung eines Ortungssystems,
Empfanden eines ersten Hochfrequenzsignals von einem ersten RFID-Tag eines ersten Golfballes durch ein RFID-Sende-/Empfangsgerät,
Ermitteln eines Golfschlägers, der mit einem RFID-Tag ausgerüstet ist,
Vergleichen des ersten Hochfrequenzsignals von dem ersten RFID-rag des ersten Golfballes gegenüber einem zweiten Hochfrequenzsignal von dem zweiten RFID-Tag eines zweiten Golfballes, der bei einem zuvor ausgeführten Golfschlag verwendet wurde, und
Ermitteln, ob ein Strafschlag, basierend auf der Position des Golfspielers auf dem Golfplatz, festzusetzen ist, wobei der Golfschläger, der mit dem RFID-Tag ausgerüstet ist, zu verwenden ist, und ob der erste Golfball von dem zweiten Golfball verschieden ist.

16. Verfahren nach Anspruch 15, das weiterhin den Verfahrensschritt des automatischen Festsetzens eines Strafschlages umfasst, wenn sich die Position des Golfballes im Aus befindet und wenn der erste Golfball von dem zweiten Golfball verschieden ist.

## Revendications

1. Système portable de collecte de données pour le golf, comprenant :
une mémoire ;
un système de géo-localisation ;
un émetteur-récepteur RF configuré pour recevoir des signaux RF (radiofréquence) d'une étiquette RF située dans un club de golf et configuré pour recevoir des signaux d'une étiquette RF située dans une balle de golf. ;
un système de traitement couplé au système de géo-localisation et à l'émetteur-récepteur RF et à la mémoire, le système de traitement étant configuré pour déterminer automatiquement lorsqu'une balle de golf a été frappée et pour faire qu'une position, déterminée par le système de localisation, soit sauvegardée dans la mémoire en réponse à la détermination automatique qu'une balle de golf a été frappée, et dans lequel un changement de la cinétique du club de golf suivi d'un changement de la cinétique de la balle de golf déclenche l'enregistrement par le système de traitement d'un coup de golf.

2. Système selon la revendication 1, dans lequel le système de traitement est programme pour déterminer automatiquement lorsqu'une balle de golf a été frappée en se basant sur le mouvement de la balle de golf, qui est précédé par le mouvement du club de golf, dans lequel le mouvement de la balle de golf est déterminé à partir de signaux RF provenant de l'étiquette RF située dans la balle de golf, et dans lequel le mouvement du club de golf est déterminé à partir de signaux RF provenant de l'étiquette RF située dans le club de golf.

3. Système selon la revendication 2, dans lequel le système de traitement est programmé pour déterminer automatiquement lorsqu'une balle de golf a été frappée en se basant aussi, si le club de golf n'est pas un putter, sur l'absence des signaux RF en provenance de l'étiquette RF située dans la balle de golf après le mouvement de la balle de golf.

4. Système selon la revendication 3, dans lequel l'émetteur-récepteur RF est configuré aussi pour permettre à un joueur de golf de retrouver une balle perdue en recevant des signaux RF d'au moins l'une d'entre l'étiquette RF située dans la balle de golf et d'une autre étiquette RF située dans la balle de golf, et dans lequel l'autre étiquette RF est l'une soit d'une étiquette radar harmonique, soit d'une étiquette RF alimentée par pile, et dans lequel le système de géo-positionnement est l'un d'entre un système de positionnement géographique par satellite, ou d'un système de positionnement géographique par téléphone mobile.

5. Système selon la revendication 3, dans lequel la mémoire contient des informations concernant un parcours de golf, qui sont comparées à la position de manière à déterminer si le coup de golf est un putt.

6. Procédé d'enregistrement d'un coup de golf, comprenant :
la détection de la présence d'une pluralité de balles de golf, chacune ayant une étiquette RFID ;
la détection de la présence d'un club de golf, le club de golf ayant une étiquette RFID ;
la détection, par un émetteur-récepteur, d'une pluralité de signaux RFID provenant de la pluralité de balles de golf ;
la détection, par l'émetteur-récepteur, d'un swing du club de golf et d'un changement de la cinétique de l'une de la pluralité de balles de golf pour ainsi déterminer que l'une des balles de golf a été frappée ; et
l'enregistrement d'un coup de golf, de manière automatique, dans l'émetteur-récepteur, en réponse à la détermination que l'une de la pluralité de balles de golf, avec son étiquette RFID, a été frappée, et dans lequel un changement de la cinétique du club de golf suivi d'un changement de la cinétique de ladite balle de la pluralité de balles de golf déclenche l'enregistrement par l'émetteur-récepteur du coup de golf,

7. Procédé selon la revendication 6, dans lequel chacune des étiquettes RFID dans chacune de la pluralité des balles de golf est pré-enregistrée avec l'émetteur-récepteur avant que la pluralité de balles de golf ne soient mises en jeu et dans lequel l'émetteur-récepteur provoque automatiquement un enregistrement d'un emplacement de ladite balle de la pluralité de balles de golf lors de l'enregistrement du coup de golf.

8. Procédé selon la revendication 7, dans lequel l'émetteur-récepteur est dans un mode puissance réduite et émet à vitesse plus lente avant de détecter la présence à la fois du club de golf et de la pluralité de balles de golf.

9. Procédé selon la revendication 8, dans lequel l'émetteur-récepteur est programmé pour recevoir un signal de l'étiquette RFID sur le club de golf, le club de golf étant, parmi une pluralité de clubs de golf ayant chacun une étiquette RFID, le club de golf qui est le plus près de l'émetteur-récepteur sur la base d'une force de signal des étiquettes RFID sur les clubs de golf.

10. Procédé selon la revendication 9, dans lequel l'émetteur-récepteur détermine celle de la pluralité de balles de golf qui est stationnaire en détectant une force de signal compatible provenant ce ladite balle de la pluralité de balles de golf et dans lequel le procédé comprend en plus :
le passage à un mode recherche de balle ; et
la détection automatique de coups d'essai.

11. Procédé selon la revendication 9, dans lequel l'émetteur-récepteur détermine qu'un joueur de golf est prêt à faire un swing lorsqu'il détecte qu'à la fois ladite balle de la pluralité de balles de golf et le club de golf ont des forces de signaux compatibles.

12. Procédé selon la revendication 11, dans lequel l'émetteur-récepteur émet et reçoit des signaux à/de l'étiquette RFID dans ladite balle de la pluralité de balles de golf et à/de l'étiquette RFID dans le club de golf à une vitesse accrue après la détection de la présence à la fois du club de golf et des balles de golf.

13. Procédé selon la revendication 9, dans lequel le changement de la cinétique de ladite balle de la pluralité de balles de golf est mesure par une rotation de la balle à partir d'une rotation de l'étiquette RFID dans ladite balle de la pluralité de balles de golf, et dans lequel le changement de la cinétique du club de golf est mesuré par au moins l'une d'une réponse radar Doppler ou transitoire dans l'amplitude ou de la réponse en phase d'un signal provenant de l'étiquette RFID sur le club de golf,

14. Procédé selon la revendication 9, dans lequel le changement de la cinétique de ladite balle de la pluralité de balles de golf comprend la non détection d'un signal provenant de ladite balle de la pluralité de balles de golf après que la balle de golf ait été frappée et soit sortie de la portée de l'émetteur-récepteur.

15. Procédé pour imposer automatiquement un coup de pénalité pendant une partie de golf, comprenait :
la détermination d'une position d'un joueur de golf sur un parcours de golf en utilisant un système de géo-localisation ;
la réception, sur un émetteur-récepteur RFID, d'un premier signal RF provenant d'une première étiquette RFID d'une première balle de golf ;
la détermination d'un club de golf ayant une étiquette RFID ;
la comparaison du premier signal RF provenant de la première étiquette RFID de la première balle de golf avec un deuxième signal RF provenant de la deuxième étiquette RFID d'une deuxième balle de golf dans un coup de golf précédemment réalisé ; et
la détermination de si un coup de pénalité doit être imposé sur la base de la position du joueur de golf sur le terrain de golf, le club de golf possédant l'étiquette RFID à utiliser, et de si la première balle de golf est différente de la deuxième balle de golf.

16. Procédé selon la revendication 15, comprenant en outre l'imposition, de manière automatique, d'un coup de pénalité si la position de la balle de golf est hors limites et si la première balle de golf est différente de la deuxième balle de golf.
